# EUROPEAN PATENT APPLICATION

(11) **EP 4 644 674 A1**
(43) Date of publication of application: **05.11.2025**
(21) Application number: 23909078.0
(22) Date of filing: 30.06.2023
(51) Int. Cl.: F02B 9/08, F02P 19/02, F02P 11/00, F02F 1/18

(54) **ENGINE AND VEHICLE**

(30) Priority: 30.12.2022 CN 202211729326
(71) Applicant: BYD Company Limited, Shenzhen, Guangdong 518118 (CN)
(72) Inventor: PAN, Shiyi, Shenzhen, Guangdong 518118 (CN); LI, Guanting, Shenzhen, Guangdong 518118 (CN); LIU, Jing, Shenzhen, Guangdong 518118 (CN)
(74) Representative: Mathys & Squire
(86) International application number: PCT/CN2023/104471
(87) International publication number: WO 2024/139134

(57) **Abstract**

A vehicle, comprising an engine. The engine comprises an engine body (100), a fuel injection system, pistons (104), and spark plugs (110). Air cylinders (101) are formed in the engine body (100). The pistons (104) are slidably arranged in the air cylinders (101), the pistons (104) defining combustion chambers (102) within the air cylinders (101). The fuel injection system is connected to the combustion chambers (102) and is used for injecting fuel into the combustion chambers (102). The engine has a first running state and a second running state. During the first running state, the spark plugs (110) ignite the fuel to heat the combustion chambers (102) by means of the heat from the fuel, so that the combustion chambers (102) may reach a set temperature during the compression stroke period, the set temperature being higher than the auto-ignition temperature of the fuel; during the second running state, the fuel injection system injects the fuel into the combustion chambers (102), so that the fuel can be heated and auto-ignite within the combustion chambers.

## Description

### CROSS-REFERENCE TO RELATED APPLICATIONS

The present disclosure claims priority to and benefits of Chinese Patent Application No. 202211729326.9, entitled "ENGINE AND VEHICLE" filed on December 30, 2022. The entire content of the above-referenced application is incorporated herein by reference.

### FIELD

The present disclosure relates to the field of automotive device technologies, and more specifically, to an engine and a vehicle.

### BACKGROUND

An engine usually includes a cylinder body, a cylinder cover, and a piston that enclose a combustion chamber. In related art, an engine combustion method typically involves first injecting oil into a combustion chamber, and then igniting injected fuel by spark plug ignition or compression ignition. However, in this method, a significant heat dissipation loss occurs, and the improvement of the thermal efficiency of the engine is limited due to knocking problems.

Therefore, it is necessary to provide a new technical solution, to resolve the foregoing technical problem.

### SUMMARY

An objective of the present disclosure is to provide a new technical solution for an engine.

According to a first aspect of the present disclosure, an engine is provided. The engine includes an engine body, a fuel injection system, a piston, and a spark plug. An air cylinder is formed in the engine body. The piston is slidably arranged in the air cylinder, and the piston defines a combustion chamber within the air cylinder. The fuel injection system is connected to the combustion chamber and is configured to inject fuel into the combustion chamber.

The engine has a first running state and a second running state.

During the first running state, the spark plug ignites the fuel to heat the combustion chamber to a set threshold by using heat from the fuel. When a temperature in the combustion chamber is greater than or equal to the set threshold, the temperature in the combustion chamber is capable of reaching an auto-ignition temperature of the fuel during a compression stroke.

During the second running state, the fuel injection system injects the fuel into the combustion chamber, to cause the fuel to be heated and auto-ignite within the combustion chamber.

Optionally, the spark plug is arranged at a top of the air cylinder.

Optionally, the engine further includes a cooling device. The cooling device is configured to cool the spark plug.

Optionally, the cooling device is further configured to cool a fuel injector nozzle of the fuel injection system.

Optionally, the engine further includes a control device. The control device is connected to the spark plug and the fuel injection system, and the control device is configured to:
obtain a representative temperature representing the temperature in the combustion chamber. When the representative temperature is a set temperature, it represents that the temperature in the combustion chamber is the set threshold;
when the representative temperature is less than the set temperature, the engine enters the first running state; or
when the representative temperature is greater than or equal to the set temperature, the engine enters the second running state

Optionally, obtaining the representative temperature representing the temperature in the combustion chamber includes obtaining a temperature at a set position in the engine body of the engine. A distance between the set position and the combustion chamber being 4 mm to 10 mm.

Optionally, the distance between the set position and the combustion chamber is 4 mm to 10 mm.

A representative temperature of the set position is greater than 150°C, or a representative temperature of the set position is greater than 200°C.

Optionally, the engine further includes a temperature sensor configured to obtain the representative temperature. The temperature sensor is arranged inside the engine body.

Optionally, the engine further includes a heat preservation device. The heat preservation device is arranged on the engine body, and the heat preservation device is configured to retain heat within the combustion chamber.

Optionally, the heat preservation device includes:
a heat preservation structure. A heat insulation cavity is formed in the heat preservation structure. The heat preservation structure is arranged on an outer side of the air cylinder and is arranged around the air cylinder.

Optionally, the heat preservation device includes:
a thermal insulation coating. The thermal insulation coating is provided on an inner wall of the air cylinder, or the thermal insulation coating is provided on the outer side of the air cylinder and provided around the air cylinder, or the thermal insulation coating is provided on an end portion of the piston.

Optionally, the engine body includes a cylinder sleeve. The cylinder sleeve is provided inside the air cylinder. An outer wall of the cylinder sleeve is adhered to an inner wall of the air cylinder. The piston is located inside the cylinder sleeve.

Optionally, the engine further includes a heat preservation device. The heat preservation device is arranged on the engine body. The heat preservation device is configured to retain heat within the combustion chamber, and the heat preservation device include a thermal insulation coating.

The thermal insulation coating is provided between the inner wall of the air cylinder and the cylinder sleeve, or the thermal insulation coating is provided on an inner wall of the cylinder sleeve.

Optionally, the engine further includes a control device and a heating device configured to heat the combustion chamber. The control device is connected to the spark plug and the fuel injection system. The heating device is connected to the control device, and the heating device includes an electric heating unit. The electric heating unit is provided between the inner wall of the air cylinder and the outer wall of the cylinder sleeve.

According to a second aspect of the present disclosure, a vehicle is provided. The vehicle includes a vehicle body and the foregoing engine, and the engine is arranged on the vehicle body.

In embodiments of the present disclosure, because a combustion method in which the fuel is heated and auto-ignites is used in the present disclosure, when the engine is in the compression stroke, after being injected from the fuel injector nozzle, the fuel gradually mixes with air and heats up. A flame in the combustion chamber starts from an end of a fuel injector bundle (that is, an end close to the piston) and gradually spreads upward. Essentially, the combustion method of heating and auto-ignition fundamentally avoids knocking.

Other features and advantages of the present disclosure become apparent from the following detailed descriptions of example embodiments of the present disclosure with reference to accompanying drawings.

### BRIEF DESCRIPTION OF THE DRAWINGS

Accompanying drawings are incorporated into and constitute a part of this specification, show embodiments of the present disclosure, and are used together with this specification to describe a principle of the present disclosure.
FIG. 1 is a sectional view of an engine according to an embodiment of the present disclosure; and
FIG. 2 is a sectional view of another engine according to an embodiment of the present disclosure.

In the drawings:
100: engine body; 101: air cylinder; 102: combustion chamber; 103: cylinder sleeve; 104: piston; 105: fuel injector nozzle; 106: intake system; 107: exhaust system; 108: control device; 109: cooling device; 110: spark plug; 111: temperature sensor; 113: thermal insulation coating.

### DETAILED DESCRIPTION

Various example embodiments of the present disclosure are now be described in detail with reference to accompanying drawings. It should be noted that unless otherwise specified, opposite arrangement, numerical expressions, and numerical values of components and steps described in embodiments do not limit the scope of the present disclosure.

The following descriptions of at least one example embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that similar numbers and letters indicate similar items in the following accompanying drawings, so that once an item is defined in an accompanying drawing, the item does not need to be discussed further in subsequent accompanying drawings.

The following describes in detail an engine provided in embodiments of the present disclosure by using a gasoline engine as an example. A person skilled in the art may learn that the engine provided in embodiments of the present disclosure may alternatively be an engine that uses other fuels, such as natural gas, methanol, ethanol, and diesel. The engine is used in an automobile, a ship, an airplane, a compression machine, engineering machinery, or the like.

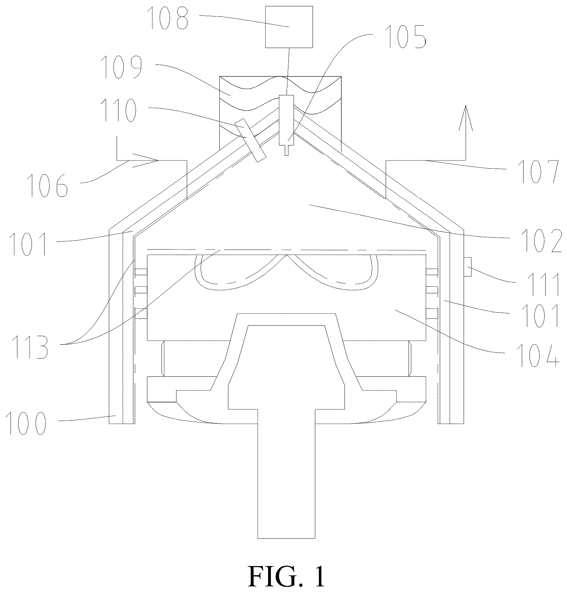

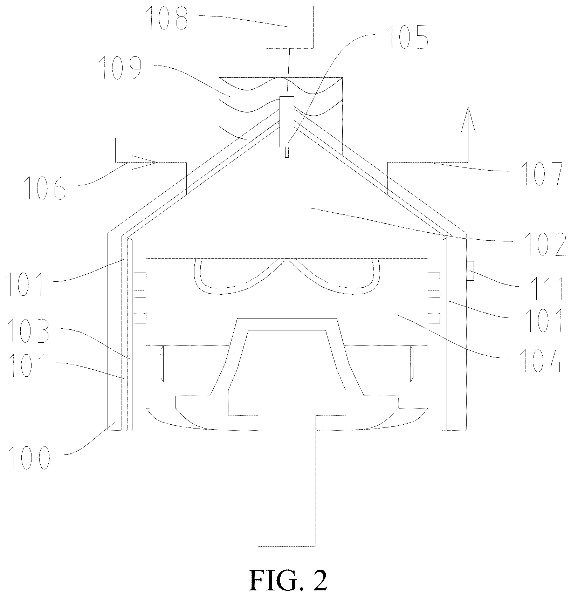

According to an embodiment of the present disclosure, an engine is provided. As shown in FIG. 1 and FIG. 2, the engine includes an engine body 100, a fuel injection system, a piston 104, and a spark plug 110. An air cylinder 101 is formed in the engine body 100. The piston 104 is slidably arranged in the air cylinder 101, and the piston 104 defines a combustion chamber 102 within the air cylinder 101, and the fuel injection system is connected to the combustion chamber 102 and is configured to inject fuel into the combustion chamber 102.

The engine has a first running state and a second running state.

During the first running state, the spark plug 110 ignites the fuel to heat the combustion chamber 102 to a set threshold by using heat from the fuel. When a temperature in the combustion chamber 102 is greater than or equal to the set threshold, the temperature in the combustion chamber 102 is capable of reaching an auto-ignition temperature of the fuel during a compression stroke.

During the second running state, the fuel injection system injects the fuel into the combustion chamber 102, to cause the fuel to be heated and auto-ignite within the combustion chamber 102.

Optionally, during the first running state, the fuel injection system may directly inject the fuel into the combustion chamber 102. Alternatively, a small quantity of fuel may be injected into an intake system 106. A part of the fuel is limited to premixed with air of the intake system 106, and a mixed gas enters the combustion chamber 102. Then, the fuel injection system continues to inject fuel into the combustion chamber 102, and the fuel and the mixed gas after premixing are then mixed in the combustion chamber 102. In a method of premixing, the fuel and the air can be more uniformly mixed. During the second running state, the fuel injection system directly injects the fuel into the combustion chamber 102.

In this embodiment of the present disclosure, the engine can be switched between the first running state and the second running state. During the first running state, the engine ignites the fuel by using the spark plug 110 to generate heat after the fuel is combusted. The heat is used to heat the combustion chamber 102. In this method, the original spark plug 110 of the engine is used to heat the combustion chamber 102. When the temperature in the combustion chamber 102 is greater than or equal to the set temperature, the fuel injected by the fuel injection system can auto-ignite.

In the example, a heating method of igniting the fuel by the spark plug 110 to heat the combustion chamber 102 by using the heat from the fuel is only applicable to heating the engine when the engine is in a warm state. In a non-warm state, if the spark plug 110 needs to be used to heat the combustion chamber 102 by igniting the fuel, control of the engine becomes complex, and power and torques output by different working cycles are different, affecting smoothness of running of the engine. In comparison with an electric heating method, the method in which the spark plug 110 ignites the fuel to heat the combustion chamber 102 results in a faster temperature rise of the combustion chamber 102, to increase starting speed of the engine.

During the first running state of the engine, the temperature in the combustion chamber 102 is heated to the set threshold. When the temperature in the combustion chamber 102 is greater than or equal to the set threshold, the combustion chamber 102 is capable of reaching the auto-ignition temperature of the fuel during the compression stroke, so that the fuel auto-ignites. During the second running state, the fuel is injected into the combustion chamber 102, so that the fuel is heated and auto-ignites. In comparison with the conventional technologies, because a combustion method in which the fuel is heated and auto-ignites is used in the present disclosure, when the engine is in the compression stroke, after being injected from the fuel injector nozzle 105, the fuel gradually mixes with air and heats up. A flame in the combustion chamber 102 starts from an end of a fuel injector bundle (that is, an end close to the piston 104) and gradually spreads upward. Essentially, the combustion method of heating and auto-ignition fundamentally avoids knocking. During the second running state, the spark plug 110 does not need to discharge to ignite the fuel.

The auto-ignition in the present disclosure means the automatic combustion of fuel. Conditions needed for auto-ignition include a fuel concentration, a comburant, a temperature reaching or exceeding an auto-ignition temperature, and the like. In the related art, the engine usually ignites the fuel in the combustion chamber 102 by using the spark plug 110. The ignition in the present disclosure means that fuel ignites under an action of a high-temperature point such as a spark or an arc.

Because the combustion method in which the fuel is heated and auto-ignites is used in the present disclosure, when the engine is in the compression stroke, after being injected from the fuel injector nozzle 105, the fuel gradually mixes with the air and heats up. A flame in the combustion chamber 102 starts from an end of a fuel injector bundle (that is, an end close to the piston 104) and gradually spreads upward. Essentially, the combustion method of heating and auto-ignition fundamentally avoids knocking.

During actual operation of the engine, the engine in this embodiment of the present disclosure has a first running state (also referred to as a warm state, a warm stage, and a first running stage) and a second running state (also referred to as a non-warm state, a non-warm stage, and a second running stage) that are switchable.

During the first running state, the engine performs heating by heating the spark plug 110. During the compression stroke of the engine, the piston 104 moves from bottom dead center to top dead center. An air pressure in the combustion chamber 102 gradually increases as the piston 104 approaches the top dead center. As the air pressure increases, the auto-ignition temperature of the fuel gradually decreases.

During the second running state, the fuel injection system of the engine injects the fuel into the combustion chamber 102. Because the temperature in the combustion chamber 102 is greater than or equal to the set threshold, the fuel auto-ignites in the combustion chamber 102.

The warm state and the non-warm state in this embodiment of the present disclosure are different from a warm state and a non-warm state in the related art. In the related art, a period of time in which components of the engine are increased to a temperature at which working efficiency is high after the engine is started is generally referred to as engine warm-up or engine preheating. Generally, the temperature in the combustion chamber 102 can only reach below 250°C and usually can only reach below 200°C during the compression stroke. However, in this embodiment of the present disclosure, a warm-up stage in which the temperature the combustion chamber 102 of the engine increases to approximately 300°C or 400°C during the compression stroke is referred to as a warm state, to ensure that the fuel can enter the combustion chamber 102 in a non-warm state to be heated and auto-ignite.

It should be noted that, to overcome the impacts of a high temperature on strength of the engine body 100, multiple methods may be used. For example, the engine body 100 is set as an integrated engine body 100, the engine body 100 is manufactured by using a material having higher heat resistance, or a thermal insulation structure is provided outside the combustion chamber 102, to reduce heat radiation from the combustion chamber 102 to the outside. A person skilled in the art may adaptively select a specific method based on an actual situation under guidance of this embodiment of the present disclosure

In the warm state, the temperature in the combustion chamber 102 does not reach the set threshold. Therefore, in this case, the fuel injection system does not inject the fuel. In other words, in this case, the fuel cannot auto-ignite in the combustion chamber 102. In the warm state, the fuel injection system may inject the fuel according to another rule. For example, to heat the combustion chamber, the fuel injection system injects the fuel, and uses the spark plug to normally ignite the fuel, to implement normal operation of the engine.

In the non-warm state, in this case, the fuel can auto-ignite in the combustion chamber 102. The fuel injection system injects the fuel into the combustion chamber 102, and the fuel in the combustion chamber 102 is heated and auto-ignites.

The auto-ignition temperature of the fuel in this embodiment of the present disclosure is an auto-ignition temperature of a fuel in a current state in the combustion chamber 102. The auto-ignition temperature is related to factors such as a pressure, a temperature, an air amount, and a fuel amount in the combustion chamber 102, and may be obtained through real-time calculation after related data is collected, or may be obtained by calibrating autoignition temperatures in various operating conditions in a table, and querying content of the table.

In an example, the spark plug 110 is arranged at a top of the air cylinder 101.

The fuel injector nozzle 105 of the fuel injection system and the intake system 106 are generally arranged at the top of the air cylinder 101. The spark plug 110 is arranged at the top, and can be closer to the fuel injector nozzle 105, so that the fuel can be more easily ignited by the spark plug 110 during the compression stroke.

When the fuel is injected, the fuel injector nozzle 105 may inject the fuel at one time, or may inject the fuel multiple times.

In an example, the engine further includes a cooling device 109. The cooling device 109 is configured to cool the spark plug 110.

A temperature of the spark plug 110 is high during discharging, and the fuel tends to form coke deposits on the spark plug 110. This affects efficiency of discharging of the spark plug 110. In the example, the cooling device 109 is arranged on the engine body 100 and is arranged around the spark plug 110. The cooling device 109 can effectively prevent excessively high spark plug 110 temperatures, to reduce the phenomenon that the fuel forms coke deposits on the spark plug 110.

Optionally, the cooling device 109 may perform cooling by using cooling liquid, air cooling, semiconductor cooling, or the like.

In an example, the cooling device 109 is further configured to cool the fuel injector nozzle 105 of the fuel injection system.

Excessively high fuel injector nozzle 105 temperatures of the fuel injection system may also cause the fuel to form coke deposits, to block the fuel injector nozzle 105. In the example, the cooling device 109 is arranged on the engine body 100 and is arranged around the spark plug 110 and the fuel injection system. The cooling device 109 can effectively prevent excessively high spark plug 110 and fuel injector nozzle 105 temperatures, to reduce the phenomenon that the fuel forms coke deposit on the spark plug 110 and the fuel injector nozzle 105.

There are multiple methods of controlling the engine to be switched between the warm state and the non-warm state. For example, according to an engine control method in this embodiment of the present disclosure, a running state of the engine may be switched based on running time of the engine. For example, when being started, the engine enters the warm state by default, and/or after the engine is started and runs for a set period of time, the engine is controlled to enter the non-warm state. After the engine is started and runs for the set period of time, the temperature in the combustion chamber 102 increases to the set temperature. In this case, it is considered that warm-up of the engine is completed.

Alternatively, a running state of the engine may be switched based on the temperature in the combustion chamber 102. For example, a temperature sensor 111 is arranged on the engine. For example, the engine further includes a control device 108. The control device 108 is connected to the spark plug 110 and the fuel injection system. The control device 108 is configured to:
obtain a representative temperature representing the temperature in the combustion chamber 102. When the representative temperature is a set temperature, it represents that the temperature in the combustion chamber 102 is the set temperature;
when the representative temperature is less than the set temperature, the engine enters the first running state; or
when the representative temperature is greater than or equal to the set temperature, the engine enters the second running state.

Specifically, when used in a vehicle, the control device 108 may be a controller of the whole vehicle, or may be a controller of the engine.

The engine further includes an intake system 106, an exhaust system 107, and a temperature sensor 111 configured to obtain the representative temperature. The intake system 106 and the exhaust system 107 are all arranged on the engine body 100. The temperature sensor 111 is arranged inside the engine body 100. Both the intake system 106 and the exhaust system 107 communicate with the combustion chamber 102. The temperature sensor 111 is arranged inside the engine body 100. The control device 108 is in signal connection with the sensor. The temperature sensor 111 is configured to sense a representative temperature representing the temperature in the combustion chamber 102. The piston 104 is connected to a crankshaft by using a connecting rod. The control device 108 controls, according to a preset rule, when the engine is in the compression stroke, the fuel injection system to inject the fuel into the combustion chamber 102, so that the fuel is heated and auto-ignites.

The preset rule is a rule for controlling the engine to inject the fuel to cause the fuel to auto-ignite. According to the preset rule, whether an input parameter satisfies a relevant condition can be determined based on the input parameter, and then a result such as whether to inject fuel, a fuel injection quantity, a fuel injection moment, and a fuel injection frequency is output. The preset rule may be preset based on compression ratio of an engine, type of fuel, engine operating parameter, and the like.

For example, the input parameter of the preset rule includes the representative temperature representing the temperature in the combustion chamber, and a determining condition of the representative temperature is whether the representative temperature is greater than the set temperature. If the representative temperature is greater than the set temperature, a result indicating that the fuel is injected is output. If the representative temperature is not greater than the set temperature, a result indicating that the fuel is not injected is output. When the representative temperature is equal to the set temperature, it represents that the temperature in the combustion chamber 102 reaches the set threshold. Under the set threshold, the temperature in the combustion chamber 102 is capable of reaching the auto-ignition temperature of the fuel during the compression stroke, so that the fuel can be heated and auto-ignite.

Further, the input parameter of the preset rule further includes at least one of compression ratio of the engine, crankshaft angle of the engine, camshaft phase of the engine, rotation speed of the engine, pressure value in the combustion chamber 102, air intake quantity of the combustion chamber 102, fuel injection quantity of the combustion chamber 102, or type of the fuel. Under a condition that the preset rule is satisfied, the fuel injection system injects the fuel into the combustion chamber 102, so that the fuel is heated and auto-ignites within the combustion chamber 102.

The compression ratio indicates a degree to which gas in the air cylinder 101 is compressed when the piston 104 moves from the bottom dead center to the top dead center. For example, the compression ratio is a ratio of a total volume of the air cylinder 101 before compression to a volume of the air cylinder 101 after compression.

Larger rotation speed of the engine indicates a higher fuel injection frequency. For example, in a four-stroke engine, the combustion chamber 102 completes one combustion and the fuel injector nozzle injects fuel once every two rotations of the crankshaft. In other words, the fuel injection frequency is equal to half of the rotation speed.

The pressure value in the combustion chamber 102 is related to parameters such as compression ratio, air intake quantity, air exhaust quantity, fuel injection quantity, and temperature. The present disclosure considers the pressure value in the combustion chamber 102 which in fact comprehensively considers the parameters such as the compression ratio, the air intake quantity, the air exhaust quantity, the fuel injection quantity, and the temperature in the combustion chamber to perform fuel injection.

The air intake quantity and the air exhaust quantity are related to the fuel injection quantity. A larger air intake quantity and a larger air exhaust quantity indicate a larger fuel injection quantity.

A higher fuel injection pressure indicates faster fuel injection speed. The fuel can quickly enter the combustion chamber and be heated. In addition, a higher fuel injection pressure indicates a wider selection range of fuel injection timing.

The camshaft phase of the engine and the crankshaft angle of the engine are used for controlling opening and closing timing of an intake valve and/or an exhaust valve of the engine. The camshaft phase is a rotation phase in which multiple cams on the camshaft open and close an intake valve and/or an exhaust valve. The crankshaft angle is an angle of rotation of the crankshaft, and the crankshaft and the camshaft may synchronously rotate by using a timing mechanism. The camshaft phase of the engine or the crankshaft angle of the engine are controlled, to effectively control opening and closing timing of the intake valve and/or the exhaust valve, so that running efficiency of the engine is higher. The rotation speed of the engine is the rotation speed of the crankshaft.

Types of fuel and injection pressures of the fuel are different, so that auto-ignition temperatures are different. Types of fuel may be gasoline, natural gas, methanol, ethanol, and the like. A fuel injection pressure value may be determined based on the compression ratio, air intake quantity, and fuel injection quantity.

The foregoing descriptions of the preset rule are merely examples. In a specific working process, under the guidance of the present disclosure, a person skilled in the art may specifically set types of input parameters of the preset rule, and correspondingly set a determining condition corresponding to the input parameters, to correspondingly output a result.

In this embodiment of the present disclosure, the engine obtains, by using the control device 108, the representative temperature representing the temperature in the combustion chamber 102. During the compression stroke, when the representative temperature reaches a set value, the fuel injection system is controlled to inject the fuel into the combustion chamber 102, so that the fuel auto-ignites. The engine can accurately control the fuel injection system to inject the fuel, to ensure complete combustion of the fuel.

In an actual engine working process, the control device 108 is configured to: during the first running state, increase the temperature in the combustion chamber 102 of the engine to the set threshold. When the temperature in the combustion chamber 102 is greater than or equal to the set threshold, the temperature in the combustion chamber 102 is capable of reaching the auto-ignition temperature of the fuel during the compression stroke. During the second running state, the control device 108 is configured to inject the fuel into the combustion chamber 102, so that the fuel is heated and auto-ignites within the combustion chamber 102.

A step of obtaining the representative temperature representing the temperature in the combustion chamber 102 may be performed during the first running state, or may be performed during the second running state. When the engine is in the compression stroke, the fuel injection system is controlled according to the preset rule to inject the fuel into the combustion chamber 102, and the fuel in the combustion chamber 102 is heated and auto-ignites during the second running state.

In addition, in the engine, before the fuel injection system injects the fuel into the combustion chamber 102, the temperature in the combustion chamber 102 reaches the set threshold, and the fuel ignites in a method of fuel auto-ignition. In comparison with a combustion method of igniting by the spark plug 110, a knocking risk is lower.

In an example, that the representative temperature representing the temperature in the combustion chamber 102 is obtained includes obtaining a temperature at a set position in the engine body 100. A distance between the set position and the combustion chamber 102 is 4 mm to 10 mm. Specifically, the temperature of the set position is used as the representative temperature.

The distance between the set position and the combustion chamber 102 is a minimum distance between the set position and an inner wall of the combustion chamber 102.

The temperature sensor 111 is arranged at the set position of the engine body 100. In other words, the temperature sensor 111 is arranged inside the engine body 100. A closer distance between the set position and the combustion chamber 102 indicates that the temperature sensor 111 senses a temperature closer to that inside the combustion chamber 102 Within the foregoing size range, it may be ensured that the representative temperature obtained by the temperature sensor 111 is closer to the temperature in the combustion chamber 102.

It will be appreciated that, the distance between the set position and the combustion chamber 102 is not limited to the foregoing embodiments, and may be selected by a person skilled in the art based on an actual requirement. In an embodiment in which a cooling water jacket is removed, the set position may be set at another position more than 10 mm away from the combustion chamber 102. When improvement is performed based on an existing engine, a position of a cylinder body and a cylinder cover that is originally used for mounting a water jacket may be used as the set position, and the temperature sensor 111 is correspondingly arranged.

In an example, the distance between the set position and the combustion chamber 102 is 4 mm to 10 mm. The temperature of the set position is greater than 150°C, or the representative temperature of the set position is greater than 200°C.

A farther distance between a position for temperature measurement and the combustion chamber 102 indicates that it is more difficult for the sensed representative temperature to accurately represent the temperature in the combustion chamber 102. Conversely,, a shorter distance indicates that it is easier for a sensed representative temperature to accurately represent the temperature in the combustion chamber 102. Within the foregoing size range, the obtained representative temperature can well represent the temperature in the combustion chamber 102.

In an example, to enable the temperature in the combustion chamber 102 to be maintained at the set threshold, the engine further includes a heat preservation device. The heat preservation device is arranged in the engine body 100, and the heat preservation device is configured to retain heat within the combustion chamber 102.

Specifically, a quantity of heat radiation from the combustion chamber 102 to the outside may be reduced by providing a thermal insulation coating 113 in the combustion chamber 102, or a heat dissipation capacity of the combustion chamber 102 can be reduced by removing the cooling water jacket outside the combustion chamber 102, reducing a cooling effect of the cooling water jacket, or providing a heat preservation structure outside the combustion chamber 102.

The heat preservation device can effectively prevent the temperature in the combustion chamber 102 from being dispersed outward, to keep the temperature in the combustion chamber 102 above the auto-ignition temperature of the fuel. In this method, it can be effectively ensured that the fuel injected into the combustion chamber 102 may auto-ignite rapidly and efficiently. In other words, in comparison with the engine in the related art, in this embodiment of the present disclosure, a cooling structure such as the cooling water jacket is removed and the heat preservation device is added in the engine.

In addition, the heat preservation device reduces heat dissipation of the fuel, to significantly improve thermal efficiency of the engine. Specifically, after the heat preservation device is arranged, a temperature of exhaust gas from the combustion chamber 102 significantly increases. One or more tail gas utilization devices may be arranged on an exhaust side of the engine, to improve a heat utilization rate, and further improve thermal efficiency of the engine.

In an example, the heat preservation device includes a heat preservation structure. A heat insulation cavity is formed in the heat preservation structure. The heat preservation structure is arranged on an outer side of the air cylinder 101 and is arranged around the air cylinder 101.

For example, in the related art, a position of the engine that is originally used for setting the cooling water jacket of the cylinder body may be used as the heat preservation structure in this example, and a cavity structure at the position is used as the heat insulation cavity. In a further example, a thermal insulation material may be filled in the heat insulation cavity, to further improve a heat preservation effect.

For example, a hollow cavity is provided on the engine body 100. The hollow cavity forms the heat insulation cavity. The heat insulation cavity can effectively perform heat insulation on the combustion chamber 102.

Further, heat insulation cotton is provided inside the heat insulation cavity. The heat insulation cotton can effectively perform an insulation function.

Alternatively, the heat insulation cavity may be vacuumized, to maintain a vacuum degree set in the heat insulation cavity. The vacuumized heat insulation cavity can achieve a heat preservation function, to effectively retain heat within the combustion chamber 102.

It will be appreciated that, the heat preservation structure is not limited in the foregoing embodiments, and may be set by a person skilled in the art based on an actual requirement.

In an example, the heat preservation device includes a thermal insulation coating 113. The thermal insulation coating 113 is provided on an inner wall of the air cylinder 101, or the thermal insulation coating 113 is provided on the outer side of the air cylinder 101 and provided around the air cylinder 101, or the thermal insulation coating 113 is provided on an end portion of the piston 104.

The thermal insulation coating 113 is configured to prevent heat in the combustion chamber 102 from diffusing outward. For example, a material of the thermal insulation coating 113 is porous anodic alumina. The porous anodic alumina is an alumina material obtained by anodizing aluminum under an acidic condition. The material has a good heat insulation effect. For example, the thermal insulation coating 113 is formed on the engine body, the air cylinder, the cylinder sleeve, or an exhaust pipe by using a powder metallurgy process.

Further, the material of the thermal insulation coating 113 is silica-reinforced porous anodic alumina. A silica coating with a micron-sized thickness is formed on a surface of the porous anodic alumina. The silica coating can effectively improve abrasion resistance of the porous anodic alumina. The material has a feature of excellent heat insulation performance, and can effectively prevent heat of the engine from being dispersed outward.

It will be appreciated that, the material of the thermal insulation coating 113 is not limited in the foregoing embodiments, and may be selected by a person skilled in the art based on an actual requirement.

A larger thickness of the thermal insulation coating 113 indicates a better thermal insulation effect. However, a larger thickness may cause the thermal insulation coating 113 to easily fall off from the engine body 100. Optionally, the thickness of the thermal insulation coating 113 is 10 µm to 100 µm. Within the range, the thermal insulation coating 113 can effectively prevent the heat in the combustion chamber 102 from diffusing outward, and connection strength of the thermal insulation coating 113 to the engine body 100 is high.

The thermal insulation coating 113 is adhered to the inner wall of the air cylinder 101, or the thermal insulation coating 113 is located on the engine body 100 and provided around the air cylinder 101. The heat insulation effect of the thermal insulation coating 113 at the foregoing position is good.

Alternatively, the thermal insulation coating 113 is provided on the end portion of the piston 104. In the example, the thermal insulation coating 113 located at the end portion of the piston 104 can effectively prevent heat from diffusing outward through the piston 104.

In a specific example, the thermal insulation coating 113 is adhered to an original cooling water jacket of the engine body 100. The cooling water jacket is provided around the combustion chamber 102. The thermal insulation coating 113 is provided on an inner wall of the cooling water jacket. The thermal insulation coating 113 can have a good heat insulation function.

In an example, the engine body 100 includes a cylinder sleeve 103. The cylinder sleeve 103 is provided inside the air cylinder 101. An outer wall of the cylinder sleeve 103 is adhered to an inner wall of the air cylinder 101. The piston 104 is located inside the cylinder sleeve 103.

A material of the cylinder sleeve 103 is harder than a material of the inner wall of the air cylinder 101, and has good abrasion resistance. The cylinder sleeve 103 can effectively improve a service life of the engine.

In an example, the engine further includes a heat preservation device. The heat preservation device is arranged in the engine body 100. The heat preservation device is configured to retain heat within the combustion chamber 102. The heat preservation device includes a thermal insulation coating 113. The thermal insulation coating 113 is provided between the inner wall of the air cylinder 101 and the cylinder sleeve 103, or the thermal insulation coating 113 is provided on an inner wall of the cylinder sleeve 103.

For example, a material and a thickness of the thermal insulation coating 113 are as described above. A thermal insulation coating 113 is provided on at least one of the outer wall of the cylinder sleeve 103 and the inner wall of the air cylinder 101. The thermal insulation coating 113 can effectively perform a thermal insulation function. In addition, the thermal insulation coating 113 at the position is not easily impacted by external force, and has good durability.

Alternatively, the thermal insulation coating 113 may be arranged on the inner wall of the cylinder sleeve 103. The thermal insulation coating 113 at the position is closer to the combustion chamber 102, so that a more effective heat preservation function can be achieved.

In an example, the engine further includes a heating device configured to heat the combustion chamber 102. The heating device is connected to the control device 108. The heating device includes an electric heating unit. The electric heating unit is provided between the inner wall of the air cylinder 101 and the outer wall of the cylinder sleeve 103.

The electric heating unit heats the combustion chamber 102, to keep the temperature of the combustion chamber 102 above the auto-ignition temperature of the fuel.

In addition, the electric heating unit is provided between the inner wall of the air cylinder 101 and the outer wall of the cylinder sleeve 103 to avoid external force impact, to significantly improve durability of the engine. In addition, the electric heating unit blocks a path for the heat in the combustion chamber 102 to be conducted outward, so that the electric heating unit can perform heat insulation and increase the temperature in the combustion chamber 102.

The control device 108 controls, based on a working frequency and working duration of the spark plug 104, a fuel injection moment, and the like, heating timing, a heating temperature, and the like of the electric heating unit.

According to another embodiment of the present disclosure, a vehicle is provided. The vehicle includes a vehicle body and the foregoing engine, and the engine is arranged on the vehicle body.

The vehicle has features of rapid engine startup, low vibration, and high thermal efficiency.

Although some specific embodiments of the present disclosure have been described in detail by way of examples, a person skilled in the art should understand that the foregoing examples are only for description and are not intended to limit the scope of the present disclosure. A person skilled in the art should understand that modifications may be made to the foregoing embodiments without departing from the scope and spirit of the present disclosure. The scope of the present disclosure is defined by the appended claims.

## Claims

1. An engine, comprising an engine body (100), a fuel injection system, a piston (104), and a spark plug (110), an air cylinder (101) being formed in the engine body (100), the piston (104) being slidably arranged in the air cylinder (101), the piston (104) defining a combustion chamber (102) within the air cylinder (101), and the fuel injection system being connected to the combustion chamber (102) and being configured to inject fuel into the combustion chamber(102);
the engine having a first running state and a second running state;
during the first running state, the spark plug (110) igniting the fuel to heat the combustion chamber (102) to a set threshold by using heat from the fuel, and when a temperature in the combustion chamber (102) is greater than or equal to the set threshold, the temperature in the combustion chamber (102) being capable of reaching an auto-ignition temperature of the fuel during a compression stroke; and
during the second running state, the fuel injection system injecting the fuel into the combustion chamber (102), to cause the fuel to be heated and auto-ignite in the combustion chamber (102).

2. The engine according to claim 1, wherein the spark plug (110) is arranged at a top of the air cylinder (101).

3. The engine according to claim 1 or 2, further comprising a cooling device (109), and the cooling device (109) being configured to cool the spark plug (110).

4. The engine according to claim 3, wherein the cooling device (109) is further configured to cool a fuel injector nozzle (105) of the fuel injection system.

5. The engine according to any one of claims 1 to 4, further comprising a control device (108), the control device (108) being connected to the spark plug (110) and the fuel injection system, and the control device (108) being configured to:
obtain a representative temperature representing the temperature in the combustion chamber (102), when the representative temperature is a set temperature, it represents that the temperature in the combustion chamber (102) is the set threshold;
when the representative temperature is less than the set temperature, the engine enters the first running state; or
when the representative temperature is greater than or equal to the set temperature, the engine enters the second running state.

6. The engine according to claim 5, wherein obtaining the representative temperature representing the temperature in the combustion chamber (102) comprises obtaining a temperature at a set position in the engine body (100) of the engine, and a distance between the set position and the combustion chamber (102) is 4 mm to 10 mm.

7. The engine according to claim 6, wherein the distance between the set position and the combustion chamber (102) is 4 mm to 10 mm; and
a representative temperature of the set position is greater than 150°C, or a representative temperature of the set position is greater than 200°C.

8. The engine according to claim 6 or 7, further comprising a temperature sensor (111) configured to obtain the representative temperature, and the temperature sensor (111) being arranged inside the engine body (100).

9. The engine according to any one of claims 1 to 8, further comprising a heat preservation device, the heat preservation device being arranged on the engine body (100), and the heat preservation device being configured to retain heat within the combustion chamber (102).

10. The engine according to claim 9, where the heat preservation device comprises:
a heat preservation structure, a heat insulation cavity being formed in the heat preservation structure, and the heat preservation structure being arranged on an outer side of the air cylinder (101) and being arranged around the air cylinder (101).

11. The engine according to claim 9 or 10, wherein the heat preservation device comprises:
a thermal insulation coating (113), the thermal insulation coating (113) being provided on an inner wall of the air cylinder (101), or the thermal insulation coating (113) being provided on the outer side of the air cylinder (101) and provided around the air cylinder (101), or the thermal insulation coating (113) being provided on an end portion of the piston (104).

12. The engine according to any one of claims 1 to 8, wherein the engine body (100) comprises a cylinder sleeve (103), the cylinder sleeve (103) is provided inside the air cylinder (101), an outer wall of the cylinder sleeve (103) is adhered to an inner wall of the air cylinder (101), and the piston (104) is located inside the cylinder sleeve (103).

13. The engine according to claim 12, further comprising a heat preservation device, the heat preservation device being arranged on the engine body (100), the heat preservation device being configured to retain heat within the combustion chamber (102), and the heat preservation device comprising a thermal insulation coating (113); and
the thermal insulation coating (113) being provided between the inner wall of the air cylinder (101) and the cylinder sleeve (103), or the thermal insulation coating (113) being provided on an inner wall of the cylinder sleeve (103).

14. The engine according to claim 12 or 13, further comprising a control device (108) and a heating device configured to heat the combustion chamber (102), the control device (108) being connected to the spark plug (110) and the fuel injection system, the heating device being connected to the control device (108), the heating device comprising an electric heating unit, and the electric heating unit being provided between the inner wall of the air cylinder (101) and the outer wall of the cylinder sleeve (103).

15. A vehicle, comprising a vehicle body and the engine according to any one of claims 1 to 14, and the engine being arranged on the vehicle body.
